# EUROPEAN PATENT SPECIFICATION

(11) **EP 2 130 883 B1**
(45) Date of publication and mention of the grant of the patent: **17.10.2018**
(21) Application number: 09251482.7
(22) Date of filing: 04.06.2009
(51) Int. Cl.: C09D 183/04

(54) **Aqueous coating agent for rubber, and rubber article coated with cured film of aqueous coating agent**
Wässriges Beschichtungsmittel für Kautschuk und Kautschukgegenstand mit gehärteter Beschichtung
Composition de revêtement aqueuse pour caoutchouc et article en caoutchouc possédant un film de revêtement durci

(30) Priority: 05.06.2008 JP 2008148594
(43) Date of publication of application: 09.12.2009
(73) Proprietor: Shin-Etsu Chemical Co., Ltd., Tokyo (JP)
(72) Inventor: Inokuchi, Yoshinori , Silicone Denshi Zairyo G.K., Annaka-shi, Gunma-ken (JP)
(74) Representative: Cockerton, Bruce Roger

(56) References cited:
- EP-A- 0 186 839
- EP-A- 0 659 857
- EP-A- 0 894 840
- EP-A- 1 634 934
- JP-A- 2004 300 374
- US-A1- 2006 222 870

## Description

### BACKGROUND OF THE INVENTION

### 1. Field of the Invention

The present invention relates to an aqueous coating agent for rubber that yields a cured film that exhibits excellent adhesion to substrates composed of rubber materials, as well as excellent abrasion resistance and surface smoothness.

### 2. Description of the Prior Art

Conventionally, in order to impart favorable surface smoothness and abrasion resistance to all manner of rubbers, methods in which the surface of the rubber is coated with a silicone composition that is subsequently cured are widely used. Examples of the silicone compositions used in these types of methods include compositions capable of forming rubber-like silicone films. However, the films obtained from these types of silicone compositions tend to exhibit poor adhesion, abrasion resistance and surface smoothness. Accordingly, in order to improve these properties, silicone compositions have been proposed in which a fine powder is blended into a silicone composition capable of forming a rubber-like silicone film. For example, silicone compositions containing a polymethylsilsesquioxane as the fine powder, silicone compositions containing a fine powder of a silicone rubber, and silicone compositions containing a fine powder of an organic resin have been proposed. However, even the films obtained from these silicone compositions containing a fine powder still exhibit unsatisfactory adhesion and abrasion resistance, particularly when coated onto a rubber substrate having a high degree of hardness. It is thought that in the case of the rubber-like silicone films described above, the unsatisfactory abrasion resistance is due to an unsatisfactory level of strength for the coating film.

Accordingly, compositions have been proposed in which a fine powder is blended into a composition that forms a resin-like silicone film. For example, a composition that includes an epoxy group-containing alkoxysilane, an amino group-containing alkoxysilane and a fine powder of an organic resin has been proposed (see Patent Document 1). Furthermore, compositions in which an organic resin is blended into a composition that forms a rubber-like silicone film have also been proposed. For example, a composition that includes an organopolysiloxane having hydroxyl groups at the molecular terminals, an organotrialkoxysilane, an organoalkoxysilane containing an amide group and a carboxyl group, an epoxy group-containing organoalkoxysilane, an acrylic-silicone graft copolymer, and a fine powder of an organic resin (see Patent Document 2), a composition that includes an organopolysiloxane having hydroxyl groups at the molecular terminals, an organohydrogenpolysiloxane, a chlorinated polyolefin and/or an acrylic-modified polyolefin, and a fine powder of a silicone rubber (see Patent Document 3), and a composition that includes an organopolysiloxane having a hydroxyl group and an aminoalkyl group at the molecular terminals, an alkoxysilane, a polyurethane resin, and a fine powder of an organic resin (see Patent Document 4) have been proposed. Although the films obtained from each of these compositions exhibit improved adhesion, the abrasion resistance is still inadequate, and further improvements are required. Patent Document 5 relates to a silicone-based coating composition in the form of an aqueous dispersion of organopolysiloxanes suitable for the surface treatment of a rubber article where the coating composition comprises four organopolysiloxanes each in the form of an aqueous dispersion or solution including (a) an organopolysiloxane having a branched molecular structure consisting of two types of the siloxane units of the general formulas R¹₂SiO and R¹SiO_{1.5}, in which R¹ is a monovalent hydrocarbon group, (b) a hydrolysis-condensation product of an epoxy group-containing dialkoxy silane compound, (c) a hydrolysis-condensation product of an aminoalkyl group-containing dialkoxy silane compound and (d) cured silicone rubber particles in a specified proportion. Patent Document 6 relates to an organopolysiloxane composition for surface treatment comprising (A) a reaction product of (1) a silane and/or a siloxane each having a substituted or unsubstituted amino group bonded to the silicon atom via at least one carbon atom and also having an alkoxy group bonded to the silicon atom and (2) a silane and/or a siloxane each having a monovalent hydrocarbon group bonded to the silicon atom, the hydrocarbon group being substituted with an epoxy-containing group, and an alkoxy group bonded to the silicon atom and (B) a specific organopolysiloxane containing an amino group. Patent Document 7 relates to a coating agent composition comprising an emulsion containing (A) polydiorganosiloxane having a viscosity of 50 to 10,000,000 mPa•s at 25 °C and having both terminal ends blocked by hydroxyl groups, (B) polyorganohydrogensiloxane having at least three hydrogen atoms bonded to silicon atoms in one molecule, (C) a curing catalyst, and (D) chlorinated polyolefine and/or acryl-modified polyolefine, with which (E) fine spherical particles comprised of a rubber-like elastomer having hardness of less than 90 are mixed to disperse into it. Patent Document 8 provides a coating composition for rubbers which forms a coating film where the composition is an aqueous resin composition containing 100 parts by weight of (A) a curable silicone composition consisting of (A-1) which is an organopolysiloxane in which a group selected from the group consisting of a hydroxyl group and groups represented by the formula R¹O-(R¹ is a monovalent hydrocarbon group), and a group represented by the formula (1), below are bonded to each of at least two terminal silicon atoms of a polysiloxane chain: 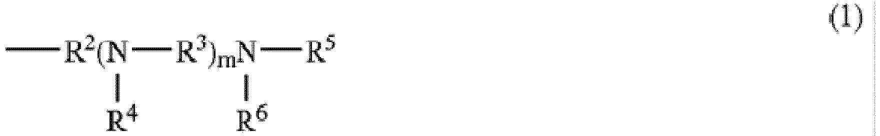 (A-2) which is an alkoxysilane and, optionally, (A-3) which is a metal compound as a condensation catalyst; 10 to 100 parts by weight of (B) a polyurethane resin; and (C) 5 to 150 parts by weight of an organic resin fine powder having a melting point of 150 °C. or higher and an average particle diameter of 0.5 to 50 µm.
[Patent Document 1] JP 2005-15502 A
[Patent Document 2] JP 2004-300374 A
[Patent Document 3] JP 2006-182936 A
[Patent Document 4] JP 2006-312713 A
[Patent Document 5] EP 0659857 A1
[Patent Document 6] EP 0894840 A1
[Patent Document 7] EP 1634934 A1
[Patent Document 8] US 2006/0222870 A1

### SUMMARY OF THE INVENTION

An object of the present invention is to provide an aqueous coating agent for rubber that yields a cured film that exhibits excellent adhesion to substrates composed of rubber materials, as well as excellent abrasion resistance and surface smoothness, and also to provide a rubber article coated with a cured film of the coating agent.

As a result of intensive investigation, the inventors of the present invention discovered that they were able to achieve the above object, and they were therefore able to complete the present invention.

In other words, a first aspect of the present invention provides an aqueous coating agent for rubber composed of an aqueous composition comprising:
component (A): an organopolysiloxane that forms a resin-like silicone film upon volatilization of water from an aqueous solution or aqueous dispersion thereof, in an amount of 40 to 85% by mass relative to a combined total of components (A) to (C),
component (B): a combination of (B1) an organopolysiloxane comprising units represented by a formula R³₂SiO_{2/2} (wherein each R³ represents, independently, an unsubstituted or substituted monovalent hydrocarbon group of 1 to 20 carbon atoms) as structural units and having hydroxyl groups at the molecular terminals, and (B2) an alkoxysilane represented by a formula R⁴ₐSi(OR⁵)₄₋ₐ (wherein R⁴ represents an unsubstituted or substituted monovalent hydrocarbon group of 1 to 20 carbon atoms, each R⁵ represents, independently, a monovalent hydrocarbon group of 1 to 6 carbon atoms, and a represents either 0 or 1), wherein the combination forms a rubber-like silicone film upon volatilization of water from an aqueous dispersion thereof, in an amount of 5 to 40% by mass relative to a combined total of components (A) to (C),
component (C): resin fine particles or rubber fine particles or a combination thereof, having a melting point of at least 100°C or having no melting point, and having a volume average particle size within a range from 1 to 40 µm, in an amount of 10 to 50% by mass relative to a combined total of components (A) to (C), and
component (D): water.

A second aspect of the present invention provides a rubber article comprising:
a substrate composed of a rubber material, and
a cured film of the above aqueous coating agent for rubber that covers at least a portion of the surface of the substrate.

The aqueous coating agent for rubber according to the present invention yields a cured film that exhibits excellent adhesion to substrates composed of rubber materials, as well as excellent abrasion resistance and surface smoothness. Accordingly, a rubber article coated with such a cured film exhibits excellent abrasion resistance and surface smoothness.

### BRIEF DESCRIPTION OF THE DRAWINGS

FIG. 1 is a perspective view illustrating a test piece used in evaluating the surface smoothness of a cured film in the examples and comparative examples.
FIG. 2 is a diagram describing a method of measuring the dynamic friction coefficient using the test piece illustrated in FIG. 1.
FIG. 3 is a diagram describing a method of measuring the abrasion resistance of a cured film in the examples and comparative examples.

### DETAILED DESCRIPTION OF THE PREFERRED EMBODIMENTS

A more detailed description of the present invention is presented below.

### [Component (A)]

The component (A) is an organopolysiloxane that forms a resin-like silicone film upon volatilization of water from an aqueous solution or aqueous dispersion thereof. The component (A) may use either a single compound or a combination of two or more different compounds. Here, the term "resin-like silicone film" describes a silicone film having a pencil hardness prescribed in JIS K5600-5-4 of at least 6B (for example, from 6B to 6H) and preferably at least H (for example, H to 6H). If the pencil hardness of the silicone film is lower than 6B, then the cured film of the resulting aqueous coating agent may exhibit inferior adhesion and abrasion resistance.

In order to prepare the aqueous coating agent for rubber according to the present invention, the component (A) is preferably used in the form of an aqueous solution or an aqueous dispersion. In those cases where the component (A) is a water-soluble organopolysiloxane, the aqueous solution of the component (A) can be prepared by simply dissolving the component (A) in water. In those cases where the organopolysiloxane of the component (A) is insoluble in water, the aqueous dispersion of the component (A) can be obtained by using a surfactant to emulsify and disperse the component (A) in water. Particularly in those cases where the water-insoluble component (A) is a solid or a highly viscous liquid, the component (A) may be emulsified and dispersed within the water in the form of an organic solvent solution. In the aqueous solution or aqueous dispersion of the component (A), the amount of the component (A) is preferably within a range from 10 to 70% by mass, and more preferably from 20 to 60% by mass.

There are no particular restrictions on the surfactant, and examples include nonionic surfactants such as polyoxyethylene alkyl ethers, polyoxyethylene polyoxypropylene alkyl ethers, polyoxyethylene alkylphenyl ethers, polyethylene glycol aliphatic acid esters, sorbitan aliphatic acid esters, polyoxyethylene sorbitan aliphatic acid esters, polyoxyethylene sorbitol aliphatic acid esters, glycerol aliphatic acid esters, polyoxyethylene glycerol aliphatic acid esters, polyglycerol aliphatic acid esters, propylene glycol aliphatic acid esters, polyoxyethylene castor oils, polyoxyethylene hardened castor oils, polyoxyethylene hardened castor oil aliphatic acid esters, polyoxyethylene alkylamines, polyoxyethylene aliphatic acid amides, polyoxyethylene-modified organopolysiloxanes, and polyoxyethylene polyoxypropylene-modified organopolysiloxanes; anionic surfactants such as alkyl sulfates, polyoxyethylene alkyl ether sulfates, polyoxyethylene alkylphenyl ether sulfates, N-acyltaurinates, alkylbenzene sulfonates, polyoxyethylene alkylphenyl ether sulfonates, α-olefin sulfonates, alkylnaphthalene sulfonates, alkyl diphenyl ether disulfonates, dialkyl sulfosuccinates, monoalkyl sulfosuccinates, polyoxyethylene alkyl ether sulfosuccinates, aliphatic acid salts, polyoxyethylene alkyl ether acetates, N-acylamino acid salts, alkenylsuccinates, alkyl phosphates, polyoxyethylene alkyl ether phosphates, polystyrene sulfonates, formalin condensates of naphthalene sulfonic acid, formalin condensates of aromatic sulfonic acids, carboxylic acid polymers, and styrene oxyalkylene acid anhydride copolymers; cationic surfactants such as alkyltrimethylammonium salts, dialkyldimethylammonium salts, polyoxyethylene alkyldimethylammonium salts, dipolyoxyethylene alkylmethylammonium salts, tripolyoxyethylene alkylammonium salts, alkylbenzyldimethylammonium salts, alkylpyridinium salts, monoalkylamine salts, monoalkylamide amine salts, and cationized cellulose; and amphoteric surfactants such as alkyl dimethylamine oxides, alkyl dimethylcarboxybetaines, alkylamide propyl dimethylcarboxybetaines, alkyl hydroxysulfobetaines, and alkylcarboxymethyl hydroxyethyl imidazolinium betaines. These surfactants may be used alone, or two or more different surfactants may be used in combination. An anionic surfactant and a cationic surfactant may not be used in combination.

The amount of the surfactant is typically within a range from 1 to 20 parts by mass, either per 100 parts by mass of the component (A) in those cases where the component (A) is dispersed in neat form in the water, or per 100 parts by mass of the organic solvent solution of the component (A) in those cases where the component (A) is dispersed in the water in the form of an organic solvent solution. Provided the amount of the surfactant is within this range, the storage stability of the resulting aqueous coating agent can be more easily maintained, and the cured film obtained from the aqueous coating agent is less likely to become brittle and is more likely to exhibit improved water resistance.

Examples of the organic solvent used in those cases where the component (A) is emulsified and dispersed in the water in the form of an organic solvent solution include linear or branched saturated hydrocarbons; aromatic hydrocarbons such as benzene, toluene and xylene; low molecular weight siloxanes; ester-based organic solvents such as propylene glycol monomethyl ether acetate, oxohexyl acetate, methylmethoxybutyl acetate, ethylethoxy propionate, ethylene glycol monobutyl ether acetate, diethylene glycol monoethyl ether acetate, diethylene glycol monobutyl ether acetate, 2,2,4-trimethyl-1,3-pentanediol monoisobutyrate, 2,2,4-trimethyl-1,3-pentanediol diisobutyrate, 2,2,4-trimethyl-1,3-pentanediol mono-2-ethylhexanoate, and 2,2,4-trimethyl-1,3-pentanediol di-2-ethylhexanoate; alcohol-based organic solvents such as isotridecanol and 1,3-octylene glycol; and ether-based organic solvents such as ethylene glycol monohexyl ether, ethylene glycol mono-2-ethylhexyl ether, diethylene glycol monoethyl ether, diethylene glycol diethyl ether, diethylene glycol monobutyl ether, diethylene glycol dibutyl ether, diethylene glycol mono-2-ethylhexyl ether, propylene glycol monophenyl ether and tripropylene glycol methyl ether. These solvents may be used alone, or two or more different solvents may be used in combination.

The amount of the component (A) within the organic solvent solution of the component (A) is preferably within a range from 30 to 95% by mass of the solution. The viscosity of the organic solvent solution at 25°C is typically within a range from 500 to 100,000 mPa·s, and is preferably from 1,000 to 50,000 mPa·s. The viscosity can be measured using a rotational viscometer.

The aqueous solution or aqueous dispersion of the component (A) may include a condensation reaction catalyst. When preparing the aqueous coating agent of the present invention using an aqueous solution or aqueous dispersion of the component (A), if a catalyst is added to the aqueous solution or aqueous dispersion, then the curability of the resulting aqueous coating agent can be effectively improved. Examples of the catalyst include metal compounds such as sodium compounds, aluminum compounds, potassium compounds, calcium compounds, titanium compounds, vanadium compounds, iron compounds, cobalt compounds, nickel compounds, zinc compounds, zirconium compounds, tin compounds, bismuth compounds and barium compounds. These catalysts may be used alone, or two or more different catalysts may be used in combination. The blend amount need only be sufficient to provide an effective catalytic action. Addition of the catalyst may be performed either by combining the catalyst and the component (A) to form a mixture, and subsequently dissolving or dispersing the mixture in water, or by mixing the catalyst with the aqueous solution or aqueous dispersion of the component (A). In those cases where the catalyst is added to an aqueous dispersion of the component (A), the catalyst may be added in neat form, in the form of a solution obtained by dissolving the catalyst in an organic solvent or a surfactant, or in the form of an emulsified dispersion obtained by dispersing the catalyst in water using a surfactant. Examples of organic solvents and surfactants that may be used include the same organic solvents and surfactants as those exemplified above.

A typical emulsification disperser may be used for dissolving the component (A) in water, or emulsifying and dispersing the component (A) or an organic solvent solution of the component (A) in water. Examples of such emulsification dispersers include high-speed rotational centrifugal radial stirrers such as a homodisper, high-speed rotational shearing stirrers such as a homomixer, high-pressure injection-type emulsification dispersers such as a homogenizer, colloid mills, and ultrasonic emulsifiers.

Generally, the units that constitute a silicone include R₃SiO_{1/2} units, R₂SiO_{2/2} units, RSiO_{3/2} units and SiO_{4/2} units (wherein R represents a monovalent organic group, and this definition also applies below), and copolymers that contain a high proportion of either one or both of RSiO_{3/2} units and SiO_{4/2} units tend to adopt a resin-like hard solid state when the polymerization degree increases. In terms of achieving an aqueous coating agent cured film that exhibits favorable surface smoothness, the organopolysiloxane of the component (A) of the present invention is preferably a copolymer containing a high proportion of RSiO_{3/2} units.

Examples of the component (A) include organopolysiloxanes containing, as structural units, units represented by a formula R¹SiO_{3/2} (wherein R¹ represents an unsubstituted or substituted monovalent hydrocarbon group of 1 to 20 carbon atoms) and units represented by a formula R²₂SiO_{2/2} (wherein each R² represents, independently, an unsubstituted or substituted monovalent hydrocarbon group of 1 to 20 carbon atoms) in a molar ratio of R¹SiO_{3/2} / R²₂SiO_{2/2} = 100/0 to 50/50, and having hydroxyl groups at the molecular terminals (hereafter these organopolysiloxanes may be referred to as the "organopolysiloxane a").

The above molar ratio of R¹SiO_{3/2} / R²₂SiO_{2/2} is typically within a range from 100/0 to 50/50, and is preferably within a range from 100/0 to 60/40. If this molar ratio is smaller than 50/50, then the hardness of the cured film of the resulting aqueous coating agent tends to decrease, and the abrasion resistance of the cured film may also deteriorate.

Examples of R¹ and R² include alkyl groups such as a methyl group, ethyl group, propyl group, butyl group, pentyl group, hexyl group, heptyl group, octyl group, decyl group, dodecyl group, tetradecyl group and octadecyl group; alkenyl groups such as a vinyl group and allyl group; aryl groups such as a phenyl group, tolyl group and naphthyl group; aralkyl groups such as a benzyl group and phenethyl group; cycloalkyl groups such as a cyclopentyl group, cyclohexyl group and cycloheptyl group; and substituted hydrocarbon groups in which some or all of the hydrogen atoms bonded to carbon atoms in any of the above groups have been substituted with either one or both of an atom such as a halogen atom (such as a fluorine atom, chlorine atom, bromine atom or iodine atom) and a substituent such as an amino group, acryloyloxy group, methacryloyloxy group, epoxy group, glycidoxy group, mercapto group or carboxyl group. The above substituents may be either unsubstituted or substituted.

Of the combined total of all the R¹ groups and all the R² groups within the component (A), from 2 to 100 mol%, and more preferably from 5 to 100 mol%, of the groups are preferably monovalent hydrocarbon groups substituted with an unsubstituted or substituted amino group. The amino group may be neutralized with an acid. Provided the amount of the monovalent hydrocarbon groups substituted with an unsubstituted or substituted amino group satisfies the above range, the component (A) may sometimes be able to be dissolved in water to prepare an aqueous solution, and moreover, when a rubber article coated with a cured film of the resulting aqueous coating agent is subjected to deformation, the cured film is unlikely to detach from the rubber article.

Provided the amount of the monovalent hydrocarbon groups substituted with an unsubstituted or substituted amino group satisfies the above range, the component (A) may be composed solely of an organopolysiloxane containing monovalent hydrocarbon groups substituted with an unsubstituted or substituted amino group, or may be a mixture of an organopolysiloxane containing the monovalent hydrocarbon groups and an organopolysiloxane containing none of the monovalent hydrocarbon groups.

Examples of the substituted amino group include amino groups that have been substituted with an unsubstituted or substituted monovalent hydrocarbon group of 1 to 20 carbon atoms. Here, examples of the unsubstituted or substituted monovalent hydrocarbon group of 1 to 20 carbon atoms include unsubstituted monovalent hydrocarbon groups such as alkyl groups, alkenyl groups, aryl groups, aralkyl groups and cycloalkyl groups; and monovalent hydrocarbon groups that have been substituted with an unsubstituted or substituted amino group. Accordingly, more specific examples of the substituted amino group include amino groups substituted with an unsubstituted monovalent hydrocarbon group of 1 to 20 carbon atoms, amino groups substituted with a monovalent hydrocarbon group of 1 to 20 carbon atoms that has been substituted with an unsubstituted or substituted amino group, and combinations of at least two of these types of groups. Of these possibilities, specific examples of the unsubstituted monovalent hydrocarbon group include the unsubstituted monovalent hydrocarbon groups exemplified above for the groups R¹ and R². Furthermore, examples of the monovalent hydrocarbon group that has been substituted with an unsubstituted or substituted amino group include monovalent hydrocarbon groups in which some or all of the hydrogen atoms bonded to carbon atoms within one of the unsubstituted monovalent hydrocarbon groups exemplified above for the groups R¹ and R² have been substituted with an unsubstituted amino group or a substituted amino group such as - NHC₂H₄NH₂, -NHC₂H₄NHC₂H₄NH₂ or -NHCH₃. Specific examples include the groups listed below.
-C₂H₄NH₂, -C₂H₄NHC₂H₄NH₂, -C₂H₄NHC₂H₄NHC₂H₄NH₂, -C₂H₄NHCH₃

In those cases where R¹ or R² is a monovalent hydrocarbon group substituted with an unsubstituted or substituted amino group, specific examples of the group are shown below, although the following is in no way an exhaustive list.
-CH₂NH₂, -C₃H₆NH₂, -C₃H₆NHC₂H₄NH₂, -C₃H₆(NHC₂H₄)₂NH₂, -C₃H₆(NHC₂H₄)₃NH₂, -C₃H₆NHCH₃, -C₃H₆NHC₂H₄NHCH₃, -C₃H₆NHC₆H₅, and -C₃H₆NHCH₂C₆H₅

In the organopolysiloxane a, the molecular terminals may include alkoxy groups besides the hydroxyl groups, and for example, may have terminal structures represented by formulas R¹₂XSiO)_{1/2}, R¹X₂SiO_{1/2}, or X₃SiO_{1/2} (wherein R¹ is as defined above, and each X represents, independently, a hydroxyl group or an alkoxy group of 1 to 6 carbon atoms). In those cases where X represents an alkoxy group of 1 to 6 carbon atoms, specific examples of the group include a methoxy group, ethoxy group, propoxy group, isopropoxy group, butoxy group, isobutoxy group, sec-butoxy group and tert-butoxy group.

In terms of the curability of the obtained aqueous coating agent, all of the molecular terminals that exists within the organopolysiloxane a preferably include a hydroxyl group. In those cases where the hydroxyl groups at the molecular terminals exhibit poor stability, provided there is no adverse effect on the curability of the resulting aqueous coating agent, a portion of the molecular terminals may have molecular structures that do not include a hydroxyl group, such as a terminal structure represented by a formula X'₃SiO_{1/2} (wherein each X' represents, independently, an unsubstituted or substituted monovalent hydrocarbon group of 1 to 20 carbon atoms, specific examples of which are the same as those listed above for R¹ and R²).

The organopolysiloxane a may include a small amount of SiO_{4/2} units for the purpose of improving the hardness of the cured film of the obtained aqueous coating agent. In such cases, the amount of these SiO_{4/2} units is preferably not more than 10 mol%, and more preferably not more than 5 mol%, relative to the combined total of all the siloxane units that constitute the organopolysiloxane a.

The organopolysiloxane a can be produced using conventional methods. For example, the organopolysiloxane a can be obtained by subjecting chlorosilanes and/or alkoxysilanes that correspond with the structural units within the organopolysiloxane a to a hydrolysis-condensation reaction. Even if the organopolysiloxane a is a liquid, by volatilizing water from the aqueous solution or aqueous dispersion of the organopolysiloxane, while also utilizing the action of either one or both of heat and a catalyst, the hydroxyl groups within the organopolysiloxane a undergo a dehydration-condensation, and any alkoxy groups that may exist within the structure undergo a dealcoholization-condensation, resulting in the generation of a cured product having a high polymerization degree, thus forming a resin-like hard silicone cured film.

The blend amount of the component (A), relative to the combined total of the components (A) to (C), is typically within a range from 40 to 85% by mass, and preferably from 50 to 75% by mass. If this blend amount is less than 40% by mass, then the hardness of the cured film of the resulting aqueous coating agent tends to fall, and the abrasion resistance may deteriorate. If the blend amount exceeds 85% by mass, then the obtained cured film tends to become brittle, and the abrasion resistance may deteriorate.

### - Silicone film for measuring pencil hardness

A silicone film for measuring the pencil hardness described above is obtained by applying an aqueous solution or aqueous dispersion of the component (A) to a polished steel sheet in an amount sufficient to generate a cured film thickness of 20 µm, and then drying the applied coating at 150°C. The drying time is typically within a range from approximately 1 to 10 minutes. The aqueous solution or aqueous dispersion of the component (A) used for forming the above silicone film may be prepared in the same manner as that described above.

### [Component (B)]

The component (B) is a combination of (B1) an organopolysiloxane comprising units represented by the formula R³₂SiO_{2/2} (wherein each R³ represents, independently, an unsubstituted or substituted monovalent hydrocarbon group of 1 to 20 carbon atoms) as structural units and having hydroxyl groups at the molecular terminals, and (B2) an alkoxysilane represented by the formula R⁴ₐSi(OR⁵)₄₋ₐ (wherein R⁴ represents an unsubstituted or substituted monovalent hydrocarbon group of 1 to 20 carbon atoms, each R⁵ represents, independently, a monovalent hydrocarbon group of 1 to 6 carbon atoms, and a represents either 0 or 1), wherein the combination forms a rubber-like silicone film upon volatilization of water from an aqueous dispersion thereof. The components (B1) and (B2) may each use either a single compound or a combination of two or more different compounds. Here, the term "rubber-like silicone film" describes a silicone film having a type A durometer hardness prescribed in JIS K6253 of 5 to 90, and preferably 5 to 50. If the hardness of the silicone film is greater than 90, then the cured film of the resulting aqueous coating agent may become brittle and is prone to a deterioration in abrasion resistance. In contrast if the hardness is less than 5, then the abrasion resistance of the cured film of the resulting aqueous coating agent tends to deteriorate.

In order to prepare the aqueous coating agent for rubber according to the present invention, the component (B) is preferably used in the form of an aqueous dispersion. The aqueous dispersion of the component (B) can be obtained, for example, by mixing the organopolysiloxane of the component (B1) and the alkoxysilane of the component (B2) to obtain the component (B), and then using a surfactant to emulsify and disperse the obtained component (B) in water. Furthermore, in those cases where the organopolysiloxane of the component (B1) is prepared as an emulsified dispersion, the aqueous dispersion of the component (B) may be prepared, for example, by adding the alkoxysilane of the component (B2) to the emulsified dispersion of the component (B1) under stirring. The component (B2) may also be added to the emulsified dispersion of the component (B1) in the form of a solution prepared by dissolving the component (B2) in an organic solvent or a surfactant. The stirring mentioned above may be conducted using a stirrer equipped with an anchor-shaped stirring blade, a propeller blade or a paddle blade or the like. Furthermore, examples of organic solvents and surfactants that may be used include the same compounds as those exemplified above in the description of the component (A). The alkoxysilane exhibits poor water solubility, and therefore when added to the emulsified dispersion of the component (B1), the alkoxysilane tends to initially be dispersed in the form of large liquid droplets, but these droplets gradually dissolve and are incorporated within the emulsified and dispersed component (B1). In the aqueous dispersion of the component (B), the amount of the component (B) is preferably within a range from 10 to 70% by mass, and more preferably from 20 to 60% by mass.

The amount of surfactant used is typically within a range from 0.1 to 20 parts by mass per 100 parts by mass of the component (B). Provided the amount of the surfactant is within this range, the storage stability of the resulting aqueous coating agent can be more readily maintained, the cured film obtained from the aqueous coating agent is less likely to become brittle, and the water resistance can be more readily improved.

The aqueous dispersion of the component (B) may include a catalyst. When preparing the aqueous coating agent of the present invention using an aqueous dispersion of the component (B), if a catalyst is added to the aqueous dispersion, then the curability of the resulting aqueous coating agent can be effectively improved. Examples of the catalyst include the same catalysts as those exemplified above in the description of the component (A). These catalysts may be used alone, or two or more different catalysts may be used in combination. The blend amount need only be sufficient to provide an effective catalytic action. Addition of the catalyst may be performed either by combining the catalyst and the component (B) to form a mixture, and subsequently dispersing the mixture in water, or by mixing the catalyst with the aqueous dispersion of the component (B). The catalyst may be added in neat form, in the form of a solution obtained by dissolving the catalyst in an organic solvent or a surfactant, or in the form of an emulsified dispersion obtained by dispersing the catalyst in water using a surfactant. Examples of organic solvents and surfactants that may be used include the same compounds as those exemplified above in the description of the component (A).

The emulsification dispersion described above can be conducted using the same type of emulsification disperser as those exemplified above in the description of the component (A).

Examples of the unsubstituted or substituted monovalent hydrocarbon group of 1 to 20 carbon atoms represented by R³ include alkyl groups such as a methyl group, ethyl group, propyl group, butyl group, pentyl group, hexyl group, heptyl group, octyl group, decyl group, dodecyl group, tetradecyl group and octadecyl group; alkenyl groups such as a vinyl group and allyl group; aryl groups such as a phenyl group, tolyl group and naphthyl group; aralkyl groups such as a benzyl group and phenethyl group; cycloalkyl groups such as a cyclopentyl group, cyclohexyl group and cycloheptyl group; and substituted monovalent hydrocarbon groups in which some or all of the hydrogen atoms bonded to carbon atoms in any of the above groups have been substituted with either one or both of an atom such as a halogen atom (such as a fluorine atom, chlorine atom, bromine atom or iodine atom) and a substituent such as an amino group, acryloyloxy group, methacryloyloxy group, epoxy group, glycidoxy group, mercapto group or carboxyl group. The above substituents may be either unsubstituted or substituted. Specific examples of these substituted hydrocarbon groups include an N-(β-aminoethyl)-γ-aminopropyl group, γ-aminopropyl group, γ-acryloyloxypropyl group, γ-methacryloyloxypropyl group, γ-glycidoxypropyl group, γ-mercaptopropyl group, and 3,3,3-trifluoropropyl group. At least 80 mol% of all the R³ groups that exist within the organopolysiloxane (B1) are preferably methyl groups.

Examples of R⁴ include the same unsubstituted and substituted monovalent hydrocarbon groups of 1 to 20 carbon atoms exemplified above for the group R³. In those cases were R⁴ is substituted with a substituent, the substituent may be either unsubstituted or substituted.

Examples of R⁵ include alkyl groups such as a methyl group, ethyl group, propyl group, butyl group, pentyl group and hexyl group, and of these, a methyl group or ethyl group is preferred.

The polymerization degree of the organopolysiloxane (B1) (namely, the total number of siloxane units within a single molecule, which is approximately equal to the number of R³₂SiO_{2/2} units) is preferably 300 or greater (for example, from 300 to 3,000). Provided the polymerization degree is at least 300, the cured film of the resulting aqueous coating agent is less likely to become brittle, and a cured film having excellent abrasion resistance is more readily obtainable.

The molecular terminals of the organopolysiloxane (B1) preferably include terminal structures represented by formulas R³₂(HO)SiO_{1/2}, R³(HO)₂SiO_{1/2}, or (HO)₃SiO_{1/2} (wherein R³ is as defined above).

In order to improve the curability of the obtained aqueous coating agent and increase the strength of the cured film of the aqueous coating agent, the organopolysiloxane (B1) may also include very small amounts of either one or both of R⁶SiO_{3/2} units (wherein R⁶ represents an unsubstituted or substituted monovalent hydrocarbon group of 1 to 20 carbon atoms, specific examples of which are the same as those exemplified above for R³) and SiO_{4/2} units. In such cases, the combined amount of these R⁶SiO_{3/2} units and SiO_{4/2} units is preferably not more than 1 mol% relative to the combined total of all the siloxane units that constitute the organopolysiloxane (B1).

The organopolysiloxane (B1) can be produced using conventional methods. For example, the organopolysiloxane can be synthesized by subjecting a cyclopolysiloxane represented by a formula [R³₂SiO]ₘ (wherein R³ is as defined above, and m is an integer of 3 to 7), if necessary an alkoxysilane represented by a formula R⁶ₐSi(OR⁷)₄₋ₐ (wherein R⁶ is as defined above, each R⁷ represents, independently, a monovalent hydrocarbon group of 1 to 6 carbon atoms, specific examples of which are the same as those exemplified above for R⁵, and a represents either 0 or 1), and water to an equilibration reaction in the presence of an acidic catalyst or alkaline catalyst.

In those cases where the organopolysiloxane (B1) obtained in this manner has a high viscosity or is in a gel-like state, then rather than using the synthesis method described above, the organopolysiloxane is preferably prepared as an emulsified dispersion using a conventional emulsification polymerization method. In other words, an aqueous dispersion of the organopolysiloxane (B1) can be readily obtained by emulsifying and dispersing either one or both of a cyclopolysiloxane represented by the formula [R³₂SiO]ₘ (wherein R³ and m are as defined above) and an organopolysiloxane represented by a formula R⁸OR³₂SiO]ₙR⁸ (wherein R³ is as defined above, each R⁸ represents, independently, a hydrogen atom or a monovalent hydrocarbon group of 1 to 6 carbon atoms, wherein specific examples of the monovalent hydrocarbon group of 1 to 6 carbon atoms are the same as those exemplified above for R⁵, and n represents an integer of 1 to 300), and if necessary an alkoxysilane represented by a formula R⁶ₐSi(OR⁷)₄₋ₐ (wherein R⁶, R⁷ and a are as defined above), in water using a surfactant, subsequently allowing a polymerization reaction to proceed by conducting an equilibration reaction in the presence of an acidic catalyst or an alkaline catalyst, and following polymerization, performing an operation such as a neutralization to deactivate the catalyst. Examples of surfactants that may be used include the same compounds as those exemplified above in the description of the component (A). Examples of the acidic catalyst include acid surfactants such as alkylsulfuric acids, alkylbenzenesulfonic acids and polyoxyethylene alkyl ether sulfuric acids; as well as hydrochloric acid, sulfuric acid, methanesulfonic acid and trifluoromethanesulfonic acid. Examples of the alkaline catalyst include sodium hydroxide, potassium hydroxide and tetramethylammonium hydroxide. Of the acidic catalysts, the acid surfactants such as alkylsulfuric acids, alkylbenzenesulfonic acids and polyoxyethylene alkyl ether sulfuric acids exhibit a surfactant action in addition to the acid catalytic action.

Examples of the alkoxysilane (B2) include methyltrimethoxysilane, methyltriethoxysilane, methyltripropoxysilane, methyltributoxysilane, ethyltrimethoxysilane, ethyltriethoxysilane, propyltrimethoxysilane, propyltriethoxysilane, butyltrimethoxysilane, pentyltrimethoxysilane, hexyltrimethoxysilane, octyltrimethoxysilane, decyltrimethoxysilane, dodecyltrimethoxysilane, tetradecyltrimethoxysilane, octadecyltrimethoxysilane, vinyltrimethoxysilane, vinyltriethoxysilane, phenyltrimethoxysilane, phenyltriethoxysilane, N-(β-aminoethyl)-γ-aminopropyltrimethoxysilane, N-β-aminoethyl)-γ-aminopropyltriethoxysilane, γ-aminopropyltrimethoxysilane, γ-aminopropyltriethoxysilane, γ-acryloyloxypropyltrimethoxysilane, γ-acryloyloxypropyltriethoxysilane, γ-methacryloyloxypropyltrimethoxysilane, γ-methacryloyloxypropyltriethoxysilane, γ-glycidoxypropyltrimethoxysilane, γ-glycidoxypropyltriethoxysilane, γ-mercaptopropyltrimethoxysilane, γ-mercaptopropyltriethoxysilane, 3,3,3-trifluoropropyltrimethoxysilane, 3,3,3-trifluoropropyltriethoxysilane, tetramethoxysilane, tetraethoxysilane, tetrapropoxysilane and tetrabutoxysilane. These compounds may be used either alone, or in combinations of two or more different compounds. From the viewpoint of achieving favorable curability for the aqueous coating agent of the present invention, methyltrimethoxysilane, methyltriethoxysilane, vinyltrimethoxysilane, vinyltriethoxysilane, phenyltrimethoxysilane, phenyltriethoxysilane, N-(β-aminoethyl)-γ-aminopropyltrimethoxysilane, N-(β-aminoethyl)-γ-aminopropyltriethoxysilane, γ-aminopropyltrimethoxysilane, γ-aminopropyltriethoxysilane, γ-acryloyloxypropyltrimethoxysilane and γ-acryloyloxypropyltriethoxysilane are preferred.

The blend amount of the alkoxysilane (B2) is set so that the amount of alkoxy groups within the component (B2) per 1.0 mols of hydroxyl groups within the component (B1) is preferably not less than 0.8 mols (for example, 0.8 to 100 mols), and is more preferably 1.0 mols or greater (for example, 1.0 to 100 mols). Provided the blend amount is within this range, the obtained aqueous coating agent is more likely to exhibit satisfactory curability. In addition, the blend amount of the alkoxysilane (B2) is preferably not more than 30 parts by mass (for example, 0.1 to 30 parts by mass) per 100 parts by mass of the organopolysiloxane (B1). Provided the blend amount satisfies this range, the cured film of the resulting aqueous coating agent is less likely to become brittle.

The blend amount of the component (B), relative to the combined total of the components (A) to (C), is typically within a range from 5 to 40% by mass, and preferably from 5 to 30% by mass. If this blend amount is less than 5% by mass, then the cured film of the obtained aqueous coating agent tends to become brittle, and the abrasion resistance may deteriorate. If the blend amount exceeds 40% by mass, then the hardness of the obtained cured film tends to fall, and the abrasion resistance may deteriorate.

### - Silicone film for measuring type A durometer hardness

A silicone film for measuring the type A durometer hardness described above is obtained by pouring an aqueous dispersion of the component (B) into a tray made of Teflon (a registered trademark) in an amount sufficient to generate a cured film thickness of 1 mm, air drying the aqueous dispersion at 25°C, and then conducting further drying at 105°C. The air drying time is typically within a range from approximately 20 to 50 hours, and the drying time is typically from approximately 10 to 30 minutes. The aqueous dispersion of the component (B) used in forming the above silicone film may be prepared in the same manner as that described above.

### [Component (C)]

The component (C) is used to improve the surface smoothness of the cured film obtained from the aqueous coating agent of the present invention, and is composed of resin fine particles or rubber fine particles or a combination thereof, having a melting point of at least 100°C or having no melting point, and having a volume average particle size within a range from 1 to 40 µm. The component (C) may use either a single material or a combination of two or more different materials.

The aqueous coating agent for rubber according to the present invention is applied to a rubber material that acts as the substrate, and is then cured by heating to form a coating film. If the melting point of the fine particles of the component (C) is too low, then the shape of the particles of the component (C) may deform during heating, causing a deterioration in the surface smoothness of the resulting cured film. Furthermore, if the rubber article that has been coated with the cured film is used in hot environments, then the shape of the particles of the component (C) may deform in a similar manner to that described above, causing a deterioration in the surface smoothness of the resulting cured film. Accordingly, the component (C) typically has a melting point of at least 100°C, and preferably 150°C or higher, or alternatively has no melting point.

If the hardness of the component (C) is high, then there is a possibility that the surface of an opposing material that rubs against the cured film may be scratched, and therefore the component (C) is preferably composed of a resin or rubber having a comparatively low level of hardness. The hardness of the component (C) cannot be measured directly, but the hardness of a cured product obtained by curing the raw material for the component (C) (namely, a cured product having the same composition as the component (C)) can be used as an indicator of the hardness. Specifically, the type A durometer hardness of such a cured product measured in accordance with JIS K6253 is preferably within a range from 10 to 90. In those cases where the component (C) is composed of fine particles of a silicone rubber, examples of the raw material for the component (C) include the types of curable liquid silicones typically used as the raw materials for silicone rubber fine particles.

The volume average particle size of the fine particles of component (C) is typically within a range from 1 to 40 µm, and preferably from 2 to 20 µm. If the volume average particle size is less than 1 µm, then the surface smoothness of the resulting cured film may deteriorate, whereas if the volume average particle size exceeds 40 µm, then the obtained cured film tends to suffer from reduced strength and inferior abrasion resistance. From the viewpoint of improving the abrasion resistance of the resulting cured film, the fine particles are preferably spherical in shape.

There are no particular restrictions on the material used for the component (C) provided the fine particles satisfy the conditions described above, and examples include polyamide resins such as Nylon 6 and Nylon 66, acrylic resins, acrylic urethane resins, polyurethane resins, polyethylene resins, polystyrene resins, polycarbonate resins, epoxy resins, phenolic resins, melamine resins, fluororesins such as polytetrafluoroethylene, polychlorotrifluoroethylene and tetrafluoroethylene-hexafluoropropylene copolymers, acrylic rubbers, urethane rubbers, silicone rubbers, and mixtures of two or more of the above materials. In terms of achieving favorable abrasion resistance for the resulting cured film, a silicone rubber is preferred.

In those cases where the component (C) is composed of fine particles of a silicone rubber, provided the silicone rubber fine particles include cross-linked structures in which a linear polymer having units represented by the formula R₂SiO_{2/2} has undergone cross-linking, and exhibit appropriate rubber-like elasticity, there are no particular restrictions on factors such as the organic groups bonded to the silicon atoms and the molecular structures of the cross-linked structures.

The component (C) can be produced as an aqueous dispersion using conventional methods. In particular, an aqueous emulsion of fine spherical particles of a silicone rubber can be obtained, for example, by emulsifying and dispersing a curable liquid silicone in water using a surfactant, and then curing the silicone. In an aqueous dispersion of the component (C), the component (C) content is preferably within a range from 10 to 70% by mass, and more preferably from 20 to 60% by mass.

The curing mechanism for the curable liquid silicone mentioned above may involve any of a variety of different reaction mechanisms, including curing that proceeds via a condensation reaction between an ≡SiOH group and another functional group, such as a condensation reaction between two ≡SiOH groups, a condensation reaction between an ≡SiOH group and an ≡SiOR group and a condensation reaction between an ≡SiOH group and an ≡SiH group; curing that proceeds via an addition reaction between an ≡SiCH=CH₂ group and an ≡SiH group; curing that proceeds via a reaction between an amino group and an epoxy group; and ultraviolet curing. However, in terms of factors such as the storage stability of the resulting aqueous dispersion of the component (C) and the curability of the obtained aqueous coating agent, curing that proceeds via an addition reaction between an ≡SiCH=CH₂ group and an ≡SiH group is ideal.

In those cases where the curing mechanism involves curing that proceeds via an addition reaction between an ≡SiCH=CH₂ group and an ≡SiH group, the raw material curable liquid silicone is typically a mixture of an organopolysiloxane having at least two alkenyl groups bonded to silicon atoms within each molecule and an organohydrogenpolysiloxane having at least two hydrogen atoms bonded to silicon atoms within each molecule, and a platinum catalyst may be used to accelerate the addition reaction.

There are no particular restrictions on the surfactant used for emulsifying and dispersing the curable liquid silicone in water, and examples include the same surfactants as those exemplified above in the description of the component (A). The amount used of the surfactant is typically within a range from 0.01 to 10 parts by mass per 100 parts by mass of the curable liquid silicone. Provided the amount of the surfactant is within this range, fine particles having an appropriate particle size can be more readily obtained, the cured film of the resulting aqueous coating agent is less likely to become brittle, and the water resistance is more likely to improve. The emulsification and dispersion can be performed using the same type of emulsification disperser as those exemplified above in the description of the component (A).

Following emulsification and dispersion of the curable liquid silicone in water, the silicone is cured by adding a conventional platinum compound or a solution thereof to the dispersion as a hydrosilylation catalyst, thus preparing the silicone rubber fine particles described above. In those cases where the platinum compound or solution thereof does not exhibit favorable dispersibility within the emulsified dispersion of the silicone, the platinum compound or solution thereof may be dissolved in a surfactant prior to addition to the dispersion.

By blending a silicone oil, a silane, an organic powder or an inorganic fine powder or the like into the raw material curable liquid silicone in advance, these types of materials can be incorporated within the silicone rubber fine particles.

The blend amount of the component (C), relative to the combined total of the components (A) to (C), is typically within a range from 10 to 50% by mass, and preferably from 15 to 40% by mass. If this blend amount is less than 10% by mass, then the cured film of the obtained aqueous coating agent may lose surface smoothness. In contrast if the blend amount exceeds 50% by mass, then the strength of the obtained cured film tends to fall, and the abrasion resistance may deteriorate.

### [Component (D)]

Component (D) is water, and is used as the medium for dissolving or dispersing the components (A) to (C). In those cases where each of the components (A) to (C) is prepared as an aqueous solution or aqueous dispersion, the water of the component (D) is introduced as the medium for each solution or dispersion, but some water may also be added separately. Furthermore, the water of the component (D) may also be added separately from the components (A) to (C). There are no particular restrictions on the amount of the component (D), provided it is sufficient to dissolve or disperse the components (A) to (C), although the amount is preferably such that the combined concentration of the components (A) to (C) within the aqueous composition that constitutes the aqueous coating agent for rubber according to the present invention is within a range from 5 to 70% by mass, and more preferably from 10 to 50% by mass.

### [Other Components]

If required, the aqueous composition that constitutes the aqueous coating agent for rubber according to the present invention may include other optional components besides the components (A) to (C) described above, including carbon blacks, paraffin waxes, polyethylene waxes, silicone oils, various organic or inorganic pigments, wetting improvers, thickeners, anti-foaming agents and preservatives, provided these optional components do not impair the effects of the present invention.

### [Aqueous Coating Agent for Rubber]

The aqueous coating agent for rubber according to the present invention is composed of an aqueous composition comprising the components (A) to (D) described above, and can be prepared by mixing the components (A) to (D), and in some cases other optional components. The coating agent is usually prepared by separately preparing an aqueous solution or aqueous dispersion of the component (A), an aqueous dispersion of the component (B) and an aqueous dispersion of the component (C) using the methods outlined above, subsequently mixing the three preparations together, adding extra water if required, and then mixing in any other optional components as required. The mixing can be conducted using a conventional mixing stirrer equipped with a paddle-shaped or anchor-shaped stirring blade.

### [Rubber Article]

A rubber article of the present invention comprises:
a substrate composed of a rubber material, and
a cured film of the above aqueous coating agent for rubber that covers at least a portion (namely, some or all) of the surface of the substrate.

Examples of the rubber material include natural rubbers, ethylene-propylene-diene rubbers (EPDM), styrene-butadiene rubbers (SBR), chloroprene rubbers, isoprene-isobutylene rubbers, nitrile rubbers, and combinations of two or more of these rubbers. There are no particular restrictions on the configuration of the substrate, and any configuration including porous materials and hard materials may be used.

The rubber article of the present invention can be obtained by applying the aqueous coating agent for rubber of the present invention to at least a portion of the surface of the substrate composed of the rubber material, and then drying and curing the aqueous coating agent by heating, thereby forming a cured film of the aqueous coating agent. Examples of methods that may be used for applying the aqueous coating agent for rubber of the present invention to the substrate include brush application, spray coating, roller coating, flow coating, dip coating and knife coating methods. The cured film is preferably formed so that the film thickness is within a range from 1 to 40 µm, and more preferably within a range from 2 to 20 µm.

The cured film obtained from the aqueous coating agent for rubber according to the present invention exhibits excellent adhesion to the substrate formed from the rubber material, as well as superior abrasion resistance and surface smoothness. Accordingly at least a portion of the surface of the rubber article of the present invention exhibits excellent abrasion resistance and surface smoothness, and is therefore useful for sealing materials such as weather strip materials for vehicles, glass run materials for vehicles, O rings, gaskets and various packing materials, and also as a rubber hose material or the like.

### EXAMPLES

A more detailed description of the present invention is provided below using a series of examples and comparative examples, although the present invention is in no way limited by the examples presented below. In the examples, the units "%" used to represent concentration and content values refer to "% by mass". Furthermore, unless stated otherwise, all operations were conducted at room temperature.

### [Evaluation Methods]

### 1. Surface smoothness

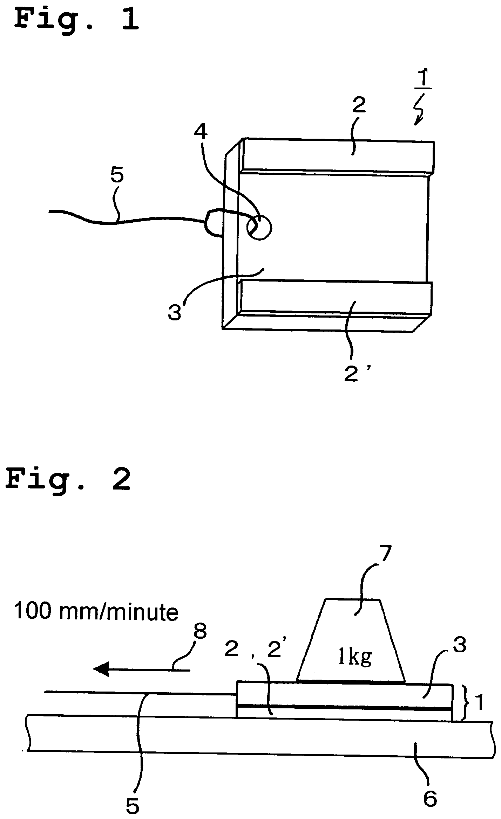

FIG. 1 is a perspective view illustrating a test piece 1 used in evaluating the surface smoothness of the cured films in the examples and comparative examples. As illustrated in FIG. 1, the test piece 1 was fabricated by coating one surface of two EPDM sheets 2 and 2' (10 mm × 50 mm, thickness: 2 mm) with the aqueous coating agent, sticking a double-sided tape to the uncoated surface of each EPDM sheet, and then using the double-sided tape to bond the two sheets along opposing edges of a square steel plate 3 (50 mm × 50 mm). A hole 4 was opened in a position close to one of the remaining edges of the steel plate 3, and a string 5 was passed through the hole 4 so that the test piece 1 was able to be pulled using the string 5.

FIG. 2 is a diagram describing a method of measuring the dynamic friction coefficient using the test piece 1 illustrated in FIG. 1. As illustrated in FIG. 2, the test piece 1 was placed on top of a glass sheet 6 with the EPDM sheets 2 and 2' facing downwards, a weight 7 of was placed on top of the test piece 1 to provide a loading of 1 kg (9.8 N), and the string 5 was used to pull the test piece 1 horizontally across the top of the glass sheet 6 in the direction of the arrow 8 shown in the figure at a pull speed of 100 mm/minute. The dynamic friction coefficient between the coated surfaces of the EPDM sheets 2 and 2' and the glass sheet 6 during the pulling operation was measured.

### 2. Adhesion

An EPDM sheet (20 mm × 50 mm, thickness: 2 mm) was coated with the aqueous coating agent, the coated surface was rubbed strongly back and forth in a straight line with a gloved index finger, and an inspection of whether or not the coating film had detached was made after each 10 back and forth rubbing repetitions (to a maximum of 30 back and forth repetitions). If no detachment was observed, then a result of "no detachment" was recorded, whereas if detachment was observed, the number of back and forth repetitions completed at the point of detachment was recorded.

### 3. Abrasion resistance

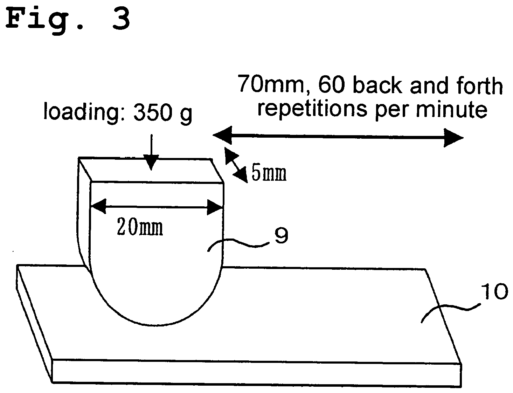

FIG. 3 is a diagram describing a method of measuring the abrasion resistance of the cured films in the examples and comparative examples. As illustrated in FIG. 3, a glass cell 9 was prepared having a semicircular shape at one end that had the dimensions shown in the figure and had been subjected to surface polishing with a No. AA80 sandpaper, and the circular end surface of this glass cell 9 was placed in linear contact, across a linear width of 5 mm, with the coated surface of an EPDM sheet 10 (15 mm × 150 mm, thickness: 2 mm) that had been coated with the aqueous coating agent. A thrust loading of 350 g (3.4 N) was applied to the glass cell 9, and back and forth frictioning of the coated surface was conducted under conditions including a frictioning rate of 60 back and forth movements/minute and a friction stroke of 70 mm. An inspection of whether or not the coated surface of the EPDM sheet had been ground down was made after each 100 back and forth repetitions for the first 1,000 repetitions, and subsequently after each 500 back and forth repetitions. The number of back and forth repetitions that had been completed when the EPDM sheet was observed to have been ground down was recorded as the result.

### [Component (A)]

### - Aqueous solution of A-1

An organopolysiloxane A-1 composed of units represented by a formula H₂NC₃H₆SiO_{3/2} and having hydroxyl groups at the molecular terminals, and sodium acetate as a catalyst component were dissolved in water to prepare an aqueous solution of A-1. Measurement of the non-volatile fraction by heating the solution for 3 hours at 105°C to volatilize the water from the aqueous solution revealed a value of 34% (non-volatile silicone fraction: 33.8%, sodium acetate: 0.2%).

The aqueous solution of A-1 was applied to the clean surface of a polished steel sheet in an amount sufficient to generate a cured film thickness of 20 µm, and the solution was then dried for 10 minutes at 150°C. Measurement of the pencil hardness of the obtained cured film in accordance with JIS K5400 revealed a hardness of 6H.

### - Aqueous dispersion of A-2

A 1 liter glass beaker was charged with 530 g of an ethylene glycol monobutyl ether acetate solution of an organopolysiloxane A-2 composed of units represented by a formula CH₃SiO_{3/2} and units represented by a formula (CH₃)₂SiO_{2/2}, having a molar ratio of CH₃SiO_{3/2} / (CH₃)₂SiO_{2/2} of 65/35 and having hydroxyl groups at the molecular terminals (mass ratio A-2 / ethylene glycol monobutyl ether acetate = 83/17), 25 g of Noigen XL-40 (a product name, manufactured by Dai-ichi Kogyo Seiyaku Co., Ltd., a polyoxyalkylene decyl ether, HLB = 10.5), 25 g of Noigen XL-400 (a product name, manufactured by Dai-ichi Kogyo Seiyaku Co., Ltd., a polyoxyalkylene decyl ether, HLB = 18.4) and 5 g of Newcol 291M (a product name, manufactured by Nippon Nyukazai Co., Ltd., a 75% solution of a sodium alkylsulfosuccinate) as emulsifying agents, and 40 g of deionized water, the mixture was stirred for 5 minutes using a homodisper, an additional 375 g of deionized water was added, and the resulting mixture was stirred with a homomixer until a uniform emulsion was obtained, thus yielding a bluish white emulsion.

Subsequently, a mixture containing 3 g of Neostan U-830 (a product name, manufactured by Nitto Kasei Co., Ltd., dioctyltin diversatate) as a catalyst and 3 g of Emulgen 109P (a product name, manufactured by Kao Corporation, polyoxyethylene lauryl ether, HLB = 13.6) as a catalyst dispersant was added to the emulsion, and following stirring for 30 minutes using an anchor-shaped stirring blade, the mixture was left to stand for 24 hours, yielding an aqueous dispersion of A-2. Measurement of the non-volatile fraction by heating the dispersion for 3 hours at 105°C to volatilize the water from the aqueous dispersion revealed a value of 49% (non-volatile silicone fraction: 44%, non-volatile fraction of other components: 5%).

The aqueous dispersion of A-2 was applied to the clean surface of a polished steel sheet in an amount sufficient to generate a cured film thickness of 20 µm, and the dispersion was then dried for 10 minutes at 150°C. Measurement of the pencil hardness of the obtained cured film in accordance with JIS K5400 revealed a hardness of 6H.

### - Aqueous dispersion of A-3

With the exception of using an organopolysiloxane A-3 composed of units represented by a formula CH₃SiO_{3/2} and having hydroxyl groups at the molecular terminals instead of the organopolysiloxane A-2, an aqueous dispersion of A-3 was prepared using the same preparation method as that described above for the aqueous dispersion of A-2. Measurement of the non-volatile fraction by heating the dispersion for 3 hours at 105°C to volatilize the water from the aqueous dispersion revealed a value of 49% (non-volatile silicone fraction: 44%, non-volatile fraction of other components: 5%).

The aqueous dispersion of A-3 was applied to the clean surface of a polished steel sheet in an amount sufficient to generate a cured film thickness of 20 µm, and the dispersion was then dried for 10 minutes at 150°C. Measurement of the pencil hardness of the obtained cured film in accordance with JIS K5400 revealed a hardness of 6H.

### [Component (B)]

### - Aqueous dispersion of B-1

A 1 liter glass beaker was charged with 500 g of octamethylcyclotetrasiloxane, 10 g of Neopelex GS-P (a product name, manufactured by Kao Corporation, dodecylbenzenesulfonic acid) as an emulsifying agent and polymerization catalyst, and 100 g of deionized water, the resulting mixture was stirred for 10 minutes using a homomixer, an additional 390 g of deionized water was added, and the mixture was stirred until uniform. Subsequently, the mixture was passed twice through a high-pressure homogenizer at a pressure of 30 MPa, thus forming a white emulsion. This emulsion was transferred to a glass flask of capacity 1 liter fitted with a stirrer, a thermometer and a reflux condenser, and was then reacted for 6 hours at 70°C, aged for a further 12 hours at 15°C, and then neutralized to a pH of 6.8 by adding 18 g of a 10% by mass aqueous solution of sodium carbonate. The polymerization degree of the organopolysiloxane contained within the thus obtained emulsion was 2,600. The polymerization degree was calculated as follows. First, isopropanol was added to the emulsion to break the emulsion, so that a solution of the organopolysiloxane was obtained. Next, the polystyrene-referenced number average molecular weight of the organopolysiloxane in the thus obtained solution was determined by gel permeation chromatography (GPC). Finally, the thus determined molecular weight was divided by 74, which is the molecular weight of a dimethylsiloxane unit, to calculate the polymerization degree.

Subsequently, 15 g of vinyltriethoxysilane was added to the above emulsion (which provided 46 mols of ethoxy groups within the vinyltriethoxysilane per 1.0 mols of hydroxyl groups within the above organopolysiloxane), the resulting mixture was stirred for one hour using an anchor-shaped stirring blade, a mixture containing 3 g of Neostan U-830 as a catalyst and 3 g of Emulgen 109P as a catalyst dispersant was added, and following stirring for 30 minutes using an anchor-shaped stirring blade, the mixture was left to stand for 24 hours, yielding an aqueous dispersion of B-1, which was a combination of the organopolysiloxane and the alkoxysilane. Measurement of the non-volatile fraction by heating the dispersion for 3 hours at 105°C to volatilize the water from the aqueous dispersion revealed a value of 47% (non-volatile silicone fraction: 45%, non-volatile fraction of other components: 2%).

The aqueous dispersion of B-1 was poured into a tray made of Teflon (a registered trademark) in an amount sufficient to generate a cured film thickness of 1 mm, the dispersion was air dried for 24 hours at 25°C, and was then further dried for 30 minutes at 105°C. Measurement of the type A durometer hardness of the resulting sheet using the method prescribed in JIS K6253 yielded a result of 12.

### - Aqueous dispersion of B-2

With the exceptions of expanding the list of raw materials added to the 1 liter glass beaker to also include 2 g of phenyltriethoxysilane, altering the amount of additional water added from 390 g to 388 g, and using a combination of 10 g of N-(β-aminoethyl)-γ-aminopropyltrimethoxysilane and 15 g of vinyltriethoxysilane instead of using only 15 g of vinyltriethoxysilane, an aqueous dispersion of B-2 was prepared using the same preparation method as that described above for the aqueous dispersion of B-1. Measurement of the non-volatile fraction by heating the dispersion for 3 hours at 105°C to volatilize the water from the aqueous dispersion revealed a value of 48% (non-volatile silicone fraction: 46%, non-volatile fraction of other components: 2%). It was inferred that the polymerization degree of the organopolysiloxane contained within the emulsion obtained from the octamethylcyclotetrasiloxane and phenyltriethoxysilane above was almost the same as that of the organopolysiloxane within the aqueous dispersion of B-1 because the aqueous dispersion of B-2 was prepared under the same reaction conditions as the aqueous dispersion of B-1. Furthermore, it was inferred that the combined amount of methoxy groups within the N-(β-aminoethyl)-γ-aminopropyltrimethoxysilane and ethoxy groups within the vinyltriethoxysilane per 1.0 mols of hydroxyl groups within the above organopolysiloxane was not less than 10 mols.

The aqueous dispersion of B-2 was poured into a tray made of Teflon (a registered trademark) in an amount sufficient to generate a cured film thickness of 1 mm, the dispersion was air dried for 24 hours at 25°C, and was then further dried for 30 minutes at 105°C. Measurement of the type A durometer hardness of the resulting sheet using the method prescribed in JIS K6253 yielded a result of 12.

### [Component (C)]

### - Aqueous dispersion of C-1

A glass beaker with a capacity of 1 liter was charged with 420 g of a methylvinylpolysiloxane represented by a formula (1) shown below and having a viscosity of 10 mPa·s, and 113 g of a methylhydrogenpolysiloxane represented by a formula (2) shown below and having a viscosity of 200 mPa·s, and the resulting mixture was stirred for 5 minutes using a homomixer. To the thus obtained mixture were added 2 g of Emulgen 109P and 40 g of deionized water, the mixture was stirred for a further 15 minutes using the homomixer, an additional 423 g of deionized water was then added, and the resulting mixture was stirred until uniform, yielding a uniform white emulsion. This emulsion was transferred to a glass flask of capacity 1 liter fitted with a anchor-shaped stirrer, a mixture containing 1.5 g of a toluene solution of a chloroplatinic acid-olefin complex (platinum content: 0.5%) as a catalyst and 1 g of Emulgen 109P as a catalyst dispersant was added, and the resulting mixture was stirred for 24 hours at room temperature, yielding an aqueous dispersion of silicone rubber fine particles C-1. Measurement of the non-volatile fraction by heating the dispersion for 3 hours at 105°C to volatilize the water from the aqueous dispersion revealed a value of 53% (non-volatile silicone fraction: 53%).

When 2 g of the aqueous dispersion of C-1 was placed in an aluminum Petri dish and heated for 30 minutes at 105°C, the resulting dried product was a powder. The fact that C-1 did not melt even when dried at a temperature of 105°C indicated that the melting point of C-1 was higher than 105°C. Measurement of the volume average particle size of C-1 using a Multisizer-3 (a product name, manufactured by Beckman Coulter, Inc.) yielded a result of 4 µm. Furthermore, inspection of the particles of C-1 using an optical microscope confirmed that the particles were spherical.

The methylvinylpolysiloxane, methylhydrogenpolysiloxane, and toluene solution of a chloroplatinic acid-olefin complex used in the preparation of C-1 were mixed together in the blend proportions described above, and the resulting mixture was poured into an aluminum Petri dish in an amount sufficient to generate a height of 8 mm, and then dried by standing for 24 hours at 25°C. Measurement of the type A durometer hardness of the resulting cured product using the method prescribed in JIS K6253 yielded a result of 72.

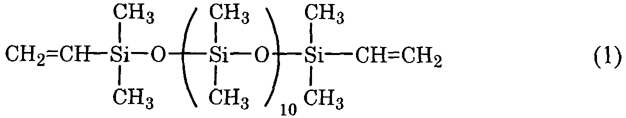

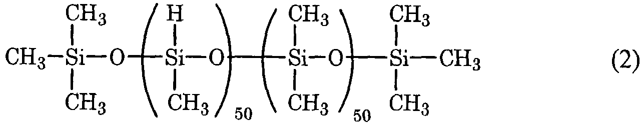

### - Aqueous dispersion of C-2

A glass beaker with a capacity of 1 liter was charged with 500 g of a methylvinylpolysiloxane represented by a formula (3) shown below and having a viscosity of 600 mPa·s, and 20 g of a methylhydrogenpolysiloxane represented by a formula (4) shown below and having a viscosity of 30 mPa·s, and the resulting mixture was stirred for 5 minutes using a homomixer. To the thus obtained mixture were added 3 g of Emulgen 109P and 55 g of deionized water, the mixture was stirred for a further 15 minutes using the homomixer, an additional 480 g of deionized water was then added, and the resulting mixture was stirred until uniform, yielding a uniform white emulsion. This emulsion was transferred to a glass flask of capacity 1 liter fitted with a anchor-shaped stirrer, a mixture containing 0.8 g of a toluene solution of a chloroplatinic acid-olefin complex (platinum content: 0.5%) as a catalyst and 1.5 g of Emulgen 109P as a catalyst dispersant was added, and the resulting mixture was stirred for 12 hours at room temperature, yielding an aqueous dispersion of silicone rubber fine particles C-2. Measurement of the non-volatile fraction by heating the dispersion for 3 hours at 105°C to volatilize the water from the aqueous dispersion revealed a value of 52% (non-volatile silicone fraction: 52%).

When 2 g of the aqueous dispersion of C-2 was placed in an aluminum Petri dish and heated for 30 minutes at 105°C, the resulting dried product was a powder. The fact that C-2 did not melt even when dried at a temperature of 105°C indicated that the melting point of C-2 was higher than 105°C. Measurement of the volume average particle size of C-2 using a Multisizer-3 (a product name, manufactured by Beckman Coulter, Inc.) yielded a result of 5 µm. Furthermore, inspection of the particles of C-2 using an optical microscope confirmed that the particles were spherical.

The methylvinylpolysiloxane, methylhydrogenpolysiloxane, and toluene solution of a chloroplatinic acid-olefin complex used in the preparation of C-2 were mixed together in the blend proportions described above, and the resulting mixture was poured into an aluminum Petri dish in an amount sufficient to generate a height of 8 mm, and then dried by standing for 24 hours at 25°C. Measurement of the type A durometer hardness of the resulting cured product using the method prescribed in JIS K6253 yielded a result of 30.

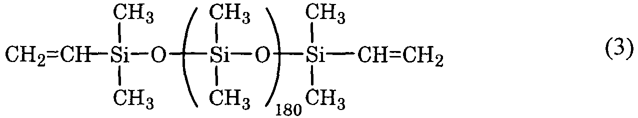

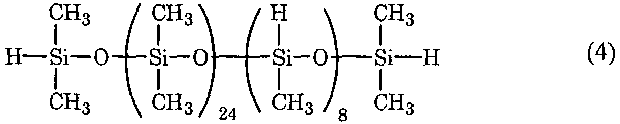

### [Examples 1 to 6, Comparative Examples 1 to 6]

The aqueous solution and aqueous dispersions of the component (A), the aqueous dispersions of the component (B), the aqueous dispersions of the component (C) and deionized water were mixed together in the blend amounts shown in Table 1 and Table 2, thus yielding a series of aqueous coating agents. Each of the obtained aqueous coating agents was applied by brush to one or both surfaces of an EPDM sheet (thickness: 2 mm), and the sheet was then placed inside a hot air circulating constant temperature chamber set to 150°C for 10 minutes, thus forming a cured film. Using the evaluation methods described above, the cured film was evaluated for surface smoothness, adhesion and abrasion resistance. The results are shown in Table 1 and Table 2.

**[Table 1]**

| Example | | | 1 | 2 | 3 | 4 | 5 | 6 |
|---|---|---|---|---|---|---|---|---|
| Blend amount (g) | Aqueous solution or aqueous dispersion of component (A) | Aqueous solution of A-1 | 72.2 | 0 | 0 | 56.3 | 73.1 | 72.7 |
| | | Aqueous dispersion of A-2 | 0 | 58.2 | 0 | 10.9 | 0 | 0 |
| | | Aqueous dispersion of A-3 | 0 | 0 | 63.4 | 0 | 0 | 0 |
| | Aqueous dispersion of component (B) | Aqueous dispersion of B-1 | 12.6 | 15.5 | 10.3 | 17.7 | 0 | 12.7 |
| | | Aqueous dispersion of B-2 | 0 | 0 | 0 | 0 | 12.5 | 0 |
| | Aqueous dispersion of component (C) | Aqueous dispersion of C-1 | 14.2 | 26.3 | 26.3 | 15.0 | 14.4 | 0 |
| | | Aqueous dispersion of C-2 | 0 | 0 | 0 | 0 | 0 | 14.6 |
| | Deionized water | | 100 | 100 | 100 | 100 | 100 | 100 |
| Mass ratio (%) | Component (A) | | 65 | 55 | 60 | 60 | 65 | 65 |
| | Component (B) | | 15 | 15 | 10 | 20 | 15 | 15 |
| | Component (C) | | 20 | 30 | 30 | 20 | 20 | 20 |
| Surface smoothness | | | 0.7 | 0.5 | 0.4 | 0.7 | 0.8 | 0.8 |
| Adhesion | | | No detachment | No detachment | No detachment | No detachment | No detachment | No detachment |
| Abrasion resistance (repetitions) | | | 6500 | 5000 | 4500 | 6500 | 7500 | 7000 |

**[Table 2]**

| Comparative example | | | 1 | 2 | 3 | 4 | 5 | 6 |
|---|---|---|---|---|---|---|---|---|
| Blend amount (g) | Aqueous solution or aqueous dispersion of component (A) | Aqueous solution of A-1 | 13.4 | 37.2 | 0 | 0 | 78.4 | 71.5 |
| | | Aqueous dispersion of A-2 | 0 | 0 | 31.9 | 0 | 0 | 0 |
| | | Aqueous dispersion of A-3 | 0 | 0 | 0 | 31.9 | 0 | 0 |
| | Aqueous dispersion of component (B) | Aqueous dispersion of B-1 | 60.8 | 46.9 | 41.6 | 41.6 | 0 | 25.0 |
| | Aqueous dispersion of component (C) | Aqueous dispersion of C-1 | 25.8 | 15.9 | 26.5 | 26.5 | 21.6 | 3.5 |
| | Deionized water | | 100 | 100 | 100 | 100 | 100 | 100 |
| Mass ratio (%) | Component (A) | | 10 | 30 | 30 | 30 | 70 | 65 |
| | Component (B) | | 60 | 50 | 40 | 40 | 0 | 30 |
| | Component (C) | | 30 | 20 | 30 | 30 | 30 | 5 |
| Surface smoothness | | | 0.4 | 0.4 | 0.3 | 0.2 | 0.7 | 0.6 |
| Adhesion | | | Detached at 10 repetitions | Detached at 30 repetitions | Detached at 20 repetitions | Detached at 30 repetitions | No detachment | No detachment |
| Abrasion resistance (repetitions) | | | 100 | 800 | 200 | 400 | 200 | 100 |

As is evident from the comparative examples, if the mass ratio for one or more of the components (A) to (C) is outside the range specified in the present invention, then the resulting cured film exhibits inferior surface smoothness, adhesion or abrasion resistance, and particularly in those cases where the mass ratio of the component (A) is small, the deterioration in the adhesion is dramatic.

## Claims

1. An aqueous coating agent for rubber composed of an aqueous composition comprising:
component (A): an organopolysiloxane that forms a resin-like silicone film having a pencil hardness prescribed in JIS K5600-5-4 of from 6B to 6H upon volatilization of water from an aqueous solution or aqueous dispersion thereof, in an amount of 40 to 85% by mass relative to a combined total of components (A) to (C), the organopolysiloxane comprising, as structural units,
units represented by a formula R¹SiO_{3/2}, wherein R¹ represents a monovalent hydrocarbon group of 1 to 20 carbon atoms which is substituted or unsubstituted with at least one substituent selected from the group consisting of a halogen atom, amino group, amino group substituted with a monovalent hydrocarbon group, acryloyloxy group, methacryloyloxy group, epoxy group, glycidoxy group, mercapto group and carboxyl group, and
units represented by a formula R²₂SiO_{2/2}, wherein each R² represents, independently, a monovalent hydrocarbon group of 1 to 20 carbon atoms which is substituted or unsubstituted with at least one of substituents selecting from the groups consisting of a halogen atom, amino group, amino group substituted with a monovalent hydrocarbon group, acryloyloxy group, methacryloyloxy group, epoxy group, glycidoxy group, mercapto group and carboxyl group,
in a molar ratio of R¹SiO_{3/2} / R²₂SiO_{2/2} = 100/0 to 50/50 and having hydroxyl groups at molecular terminals,
component (B): a combination of
(B1) an organopolysiloxane comprising, as structural units, units represented by a formula R³₂SiO_{2/2}, wherein each R³ represents, independently, a monovalent hydrocarbon group of 1 to 20 carbon atoms which is substituted or unsubstituted with at least one substituent selected from the group consisting of a halogen atom, amino group, amino group substituted with a monovalent hydrocarbon group, acryloyloxy group, methacryloyloxy group, epoxy group, glycidoxy group, mercapto group and carboxyl group, and having hydroxyl groups at molecular terminals, and
(B2) an alkoxysilane represented by a formula R⁴ₐSi(OR⁵)₄₋ₐ, wherein R⁴ represents a monovalent hydrocarbon group of 1 to 20 carbon atoms which is substituted or unsubstituted with at least one substituent selected from the group consisting of a halogen atom, amino group, amino group substituted with a monovalent hydrocarbon group, acryloyloxy group, methacryloyloxy group, epoxy group, glycidoxy group, mercapto group and carboxyl group, and each R⁵ represents, independently, a monovalent hydrocarbon group of 1 to 6 carbon atoms, and a represents either 0 or 1,
wherein the combination forms a rubber-like silicone film having a type A durometer hardness prescribed in JIS K6253 of 5 to 90 upon volatilization of water from an aqueous dispersion thereof, in an amount of 5 to 40% by mass relative to a combined total of components (A) to (C),
component (C): resin fine particles or rubber fine particles or a combination thereof, having a melting point of at least 100°C or having no melting point, and having a volume average particle size within a range from 1 to 40 µm, in an amount of 10 to 50% by mass relative to a combined total of components (A) to (C), wherein a material for component (C) is a polyamide resin, acrylic resin, acrylic urethane resin, polyurethane resin, polyethylene resin, polystyrene resin, polycarbonate resin, epoxy resin, phenolic resin, melamine resin, fluororesin, acrylic rubber, urethane rubber, silicone rubber, or a combination of at least two of these materials and wherein said fine particles of silicone rubber are obtained by curing a curable liquid silicone via an addition reaction between an ≡SiCH=CH₂ group and an ≡SiH group, and
component (D): water.

2. The aqueous coating agent for rubber according to Claim 1, wherein 2 to 100 mol% of a combined total of all R¹ groups and all R² groups within component (A) are monovalent hydrocarbon groups substituted with an unsubstituted or substituted amino group.

3. The aqueous coating agent for rubber according to Claim 2, wherein the substituted amino group is an amino group that has been substituted with an unsubstituted monovalent hydrocarbon group of 1 to 20 carbon atoms, an amino group that has been substituted with a monovalent hydrocarbon group of 1 to 20 carbon atoms substituted with an unsubstituted or substituted amino group, or a combination of at least two of these substituted amino groups.

4. The aqueous coating agent for rubber according to any one of Claims 1 to 3, wherein a polymerization degree of component (B1) is at least 300.

5. The aqueous coating agent for rubber according to any one of Claims 1 to 4, wherein component (B1) further comprises units represented by a formula SiO_{4/2}.

6. The aqueous coating agent for rubber according to any one of Claims 1 to 5, wherein an amount of alkoxy groups within component (B2) per 1.0 mols of hydroxyl groups within component (B1) is not less than 0.8 mols.

7. The aqueous coating agent for rubber according to any one of Claims 1 to 6, wherein component (C) is fine spherical particles of a silicone rubber.

8. The aqueous coating agent for rubber according to any one of Claims 1 to 7, wherein a type A durometer hardness prescribed in JIS K6253 for a cured product having an identical composition to component (C) is within a range from 10 to 90.

9. A rubber article comprising:
a substrate composed of a rubber material, and
a cured film of the aqueous coating agent for rubber according to any one of Claims 1 to 8 that covers at least a portion of a surface of the substrate.

10. The rubber article according to Claim 9, wherein the rubber material is a natural rubber, ethylene-propylene-diene rubber, styrene-butadiene rubber, chloroprene rubber, isoprene-isobutylene rubber, nitrile rubber, or a combination of at least two of these rubber materials.

## Patentansprüche

1. Wässriges Beschichtungsmittel für Kautschuk, bestehend aus einer wässrigen Zusammensetzung, umfassend:
Komponente (A): ein Organopolysiloxan, das bei Verflüchtigung von Wasser aus der wässrigen Lösung oder wässrigen Dispersion davon einen harzhaltigen Silikonfilm mit einer Bleistifthärte gemäß JIS K5600-5-4 von 6B bis 6H bildet, in einer Menge von 40 bis 85 Massen-%, bezogen auf die Gesamtsumme der Komponenten (A) bis (C), wobei das Organopolysiloxan als Struktureinheiten
Einheiten der Formel R¹SiO_{3/2}, wobei R¹ für eine einwertige Kohlenwasserstoffgruppe mit 1 bis 20 Kohlenstoffatomen, die gegebenenfalls durch mindestens einen Substituenten aus der Gruppe bestehend aus einem Halogenatom, einer Aminogruppe, einer durch eine einwertige Kohlenwasserstoffgruppe substituierten Aminogruppe, einer Acryloyloxygruppe, einer Methacryloyloxygruppe, einer Epoxidgruppe, einer Glycidoxygruppe, einer Mercaptogruppe und einer Carboxylgruppe substituiert ist, steht, und
Einheiten der Formel R²₂SiO_{2/2}, wobei R² jeweils unabhängig für eine einwertige Kohlenwasserstoffgruppe mit 1 bis 20 Kohlenstoffatomen, die gegebenenfalls durch mindestens einen Substituenten aus der Gruppe bestehend aus einem Halogenatom, einer Aminogruppe, einer durch eine einwertige Kohlenwasserstoffgruppe substituierten Aminogruppe, einer Acryloyloxygruppe, einer Methacryloyloxygruppe, einer Epoxidgruppe, einer Glycidoxygruppe, einer Mercaptogruppe und einer Carboxylgruppe substituiert ist, steht,
in einem Molverhältnis von R¹SiO_{3/2} / R²₂SiO_{2/2} = 100/0 bis 50/50 umfasst und an den Molekülenden Hydroxylgruppen aufweist,
Komponente (B): eine Kombination von
(B1) einem Organopolysiloxan, das als Struktureinheiten Einheiten der Formel R³₂SiO_{2/2}, wobei R³ jeweils unabhängig für eine einwertige Kohlenwasserstoffgruppe mit 1 bis 20 Kohlenstoffatomen, die gegebenenfalls durch mindestens einen Substituenten aus der Gruppe bestehend aus einem Halogenatom, einer Aminogruppe, einer durch eine einwertige Kohlenwasserstoffgruppe substituierten Aminogruppe, einer Acryloyloxygruppe, einer Methacryloyloxygruppe, einer Epoxidgruppe, einer Glycidoxygruppe, einer Mercaptogruppe und einer Carboxylgruppe substituiert ist, steht, umfasst und an den Molekülenden Hydroxylgruppen aufweist, und
(B2) einem Alkoxysilan der Formel R⁴ₐSi(OR⁵)₄₋ₐ, wobei R⁴ für eine einwertige Kohlenwasserstoffgruppe mit 1 bis 20 Kohlenstoffatomen, die gegebenenfalls durch mindestens einen Substituenten aus der Gruppe bestehend aus einem Halogenatom, einer Aminogruppe, einer durch eine einwertige Kohlenwasserstoffgruppe substituierten Aminogruppe, einer Acryloyloxygruppe, einer Methacryloyloxygruppe, einer Epoxidgruppe, einer Glycidoxygruppe, einer Mercaptogruppe und einer Carboxylgruppe substituiert ist, steht, und R⁵ jeweils unabhängig für eine einwertige Kohlenwasserstoffgruppe mit 1 bis 6 Kohlenstoffatomen steht und a entweder für 0 oder für 1 steht,
wobei die Kombination bei Verflüchtigung von Wasser aus einer wässrigen Dispersion davon einen kautschukartigen Silikonfilm mit einer Typ-A-Durometerhärte gemäß JIS K6253 von 5 bis 90 bildet, in einer Menge von 5 bis 40 Massen-%, bezogen auf die Gesamtsumme der Komponenten (A) bis (C),
Komponente (C): feine Harzteilchen oder feine Kautschukteilchen oder eine Kombination davon mit einem Schmelzpunkt von mindestens 100 °C oder ohne Schmelzpunkt und mit einer volumenmittleren Teilchengröße im Bereich von 1 bis 40 µm in einer Menge von 10 bis 50 Massen-%, bezogen auf die Gesamtsumme der Komponenten (A) bis (C), wobei es sich bei dem Material für Komponente (C) um ein Polyamidharz, ein Acrylharz, ein Acrylurethanharz, ein Polyurethanharz, ein Polyethylenharz, ein Polystyrolharz, ein Polycarbonatharz, ein Epoxidharz, ein Phenolharz, ein Melaminharz, ein Fluorharz, einen Acrylkautschuk, einen Urethankautschuk, einen Silikonkautschuk oder eine Kombination von mindestens zwei dieser Materialien handelt und wobei die feinen Silikonkautschukteilchen durch Härten eines härtbaren flüssigen Silikons durch eine Härtungsreaktion zwischen einer ≡SiCH=CH₂-Gruppe und einer ≡SiH-Gruppe erhalten werden, und
Komponente (D): Wasser.

2. Wässriges Beschichtungsmittel für Kautschuk nach Anspruch 1, wobei es sich bei 2 bis 100 Mol-% der Gesamtsumme aller R¹-Gruppen und aller R²-Gruppen in Komponente (A) um einwertige Kohlenwasserstoffgruppen, die durch eine gegebenenfalls substituierte Aminogruppe substituiert sind, handelt.

3. Wässriges Beschichtungsmittel für Kautschuk nach Anspruch 2, wobei es sich bei der substituierten Aminogruppe um eine durch eine unsubstituierte einwertige Kohlenwasserstoffgruppe mit 1 bis 20 Kohlenstoffatomen substituierte Aminogruppe, eine durch eine einwertige Kohlenwasserstoffgruppe mit 1 bis 20 Kohlenstoffatomen, die durch eine gegebenenfalls substituierte Aminogruppe substituiert ist, oder eine Kombination von mindestens zwei dieser substituierten Aminogruppen handelt.

4. Wässriges Beschichtungsmittel für Kautschuk nach einem der Ansprüche 1 bis 3, wobei der Polymerisationsgrad der Komponente (B1) mindestens 300 beträgt.

5. Wässriges Beschichtungsmittel für Kautschuk nach einem der Ansprüche 1 bis 4, wobei Komponente (B1) ferner Einheiten der Formel SiO_{4/2} umfasst.

6. Wässriges Beschichtungsmittel für Kautschuk nach einem der Ansprüche 1 bis 5, wobei die Menge von Alkoxygruppen in Komponente (B2) pro 1,0 mol Hydroxylgruppen in Komponente (B1) nicht weniger als 0,8 mol beträgt.

7. Wässriges Beschichtungsmittel für Kautschuk nach einem der Ansprüche 1 bis 6, wobei es sich bei Komponente (C) um feine kugelförmige Teilchen eines Silikonkautschuks handelt.

8. Wässriges Beschichtungsmittel für Kautschuk nach einem der Ansprüche 1 bis 7, wobei die Typ-A-Durometerhärte gemäß JIS K6253 für ein gehärtetes Produkt mit einer Zusammensetzung, die mit Komponente (C) identisch ist, im Bereich von 10 bis 90 liegt.

9. Kautschukartikel, umfassend:
ein Substrat aus einem Kautschukmaterial und
einem gehärteten Film des wässrigen Beschichtungsmittels für Kautschuk nach einem der Ansprüche 1 bis 8, das mindestens einen Teil einer Oberfläche des Substrats bedeckt.

10. Kautschukartikel nach Anspruch 9, wobei es sich bei dem Kautschukmaterial um Naturkautschuk, Ethylen-Propylen-Dien-Kautschuk, Styrol-Butadien-Kautschuk, Chloroprenkautschuk, Isopren-Isobutylen-Kautschuk, Nitrilkautschuk oder eine Kombination von mindestens zwei dieser Kautschukmaterialien handelt.

## Revendications

1. Agent aqueux de revêtement pour du caoutchouc composé d'une composition aqueuse comprenant :
un composant (A) : un organopolysiloxane qui forme un film de silicone de type résine ayant une dureté crayon préconisée dans la norme JIS K5600-5-4 de 6B à 6H lors de l'évaporation de l'eau d'une solution aqueuse ou dispersion aqueuse de celui-ci, en une quantité de 40 à 85 % en masse par rapport à un total combiné des composants (A) à (C), l'organopolysiloxane comprenant, en tant que motifs de structure,
des motifs représentés par une formule R¹SiO_{3/2}, dans laquelle R¹ représente un groupe hydrocarboné monovalent de 1 à 20 atomes de carbone qui est substitué ou non substitué par au moins un substituant choisi dans le groupe constitué par un atome d'halogène, un groupe amino, un groupe amino substitué par un groupe hydrocarboné monovalent, un groupe acryloyloxy, un groupe méthacryloyloxy, un groupe époxy, un groupe glycidoxy, un groupe mercapto et un groupe carboxyle et
des motifs représentés par une formule R²₂SiO_{2/2}, dans laquelle chaque R² représente, indépendamment, un groupe hydrocarboné monovalent de 1 à 20 atomes de carbone qui est substitué ou non substitué par au moins l'un des substituants choisis dans les groupes constitués par un atome d'halogène, un groupe amino, un groupe amino substitué par un groupe hydrocarboné monovalent, un groupe acryloyloxy, un groupe méthacryloyloxy, un groupe époxy, un groupe glycidoxy, un groupe mercapto et un groupe carboxyle,
en un rapport molaire R¹SiO_{3/2}/R²₂SiO_{2/2} = 100/0 à 50/50 et ayant des groupes hydroxyle aux extrémités moléculaires,
un composant (B) : une combinaison de
(B1) un organopolysiloxane comprenant, en tant que motifs de structure, des motifs représentés par une formule R³₂SiO_{2/2}, dans laquelle chaque R³ représente, indépendamment, un groupe hydrocarboné monovalent de 1 à 20 atomes de carbone qui est substitué ou non substitué par au moins un substituant choisi dans le groupe constitué par un atome d'halogène, un groupe amino, un groupe amino substitué par un groupe hydrocarboné monovalent, un groupe acryloyloxy, un groupe méthacryloyloxy, un groupe époxy, un groupe glycidoxy, un groupe mercapto et un groupe carboxyle et ayant des groupes hydroxyle aux extrémités moléculaires,
(B2) un alcoxysilane représenté par une formule R⁴ₐSi(OR⁵)₄₋ₐ, dans laquelle R⁴ représente un groupe hydrocarboné monovalent de 1 à 20 atomes de carbone qui est substitué ou non substitué par au moins un substituant choisi dans le groupe constitué par un atome d'halogène, un groupe amino, un groupe amino substitué par un groupe hydrocarboné monovalent, un groupe acryloyloxy, un groupe méthacryloyloxy, un groupe époxy, un groupe glycidoxy, un groupe mercapto et un groupe carboxyle et chaque R⁵ représente, indépendamment, un groupe hydrocarboné monovalent de 1 à 6 atomes et a représente soit 0 soit 1,
la combinaison formant un film de silicone caoutchouteux ayant une dureté d'après duromètre de type A préconisée dans la norme JIS K6253 de 5 à 90 lors de l'évaporation de l'eau d'une dispersion aqueuse de celle-ci, en une quantité de 5 à 40 % en masse par rapport à un total combiné des composants (A) à (C),
un composant (C) : de fines particules de résine ou fines particules de caoutchouc ou une combinaison de celles-ci, ayant un point de fusion d'au moins 100 °C ou n'ayant pas de point de fusion et ayant une taille de particule moyenne en volume dans une plage de 1 à 40 µm, en une quantité de 10 à 50 % en masse par rapport à un total combiné des composants (A) à (C), un matériau pour le composant (C) étant une résine de polyamide, une résine acrylique, une résine acrylique-uréthane, une résine de polyuréthane, une résine de polyéthylène, une résine de polystyrène, une résine de polycarbonate, une résine époxy, une résine phénolique, une résine de mélamine, une résine fluorée, un caoutchouc acrylique, un caoutchouc uréthane, un caoutchouc silicone ou une combinaison d'au moins deux de ces matériaux et lesdites fines particules de caoutchouc silicone étant obtenues par durcissement d'une silicone liquide durcissable par l'intermédiaire d'une réaction d'addition entre un groupe ≡SiCH=CH₂ et un groupe ≡SiH, et
un composant (D) : de l'eau.

2. Agent aqueux de revêtement pour du caoutchouc selon la revendication 1, dans lequel 2 à 100 % en mole d'un total combiné de tous les groupes R¹ et tous les groupes R² au sein du composant (A) sont des groupes hydrocarbonés monovalents substitués par un groupe amino non substitué ou substitué.

3. Agent aqueux de revêtement pour du caoutchouc selon la revendication 2, dans lequel le groupe amino substitué est un groupe amino qui a été substitué par un groupe hydrocarboné monovalent de 1 à 20 atomes de carbone non substitué, un groupe amino qui a été substitué par un groupe hydrocarboné monovalent de 1 à 20 atomes de carbone substitué par un groupe amino non substitué ou substitué ou une combinaison d'au moins deux de ces groupes amino substitués.

4. Agent aqueux de revêtement pour du caoutchouc selon l'une quelconque des revendications 1 à 3, dans lequel un degré de polymérisation du composant (B1) est d'au moins 300.

5. Agent aqueux de revêtement pour du caoutchouc selon l'une quelconque des revendications 1 à 4, dans lequel le composant (B1) comprend en outre des motifs représentés par une formule SiO_{4/2}.

6. Agent aqueux de revêtement pour du caoutchouc selon l'une quelconque des revendications 1 à 5, dans lequel une quantité de groupes alcoxy au sein du composant (B2) pour 1,0 mol de groupes hydroxyle au sein du composant (B1) n'est pas inférieure à 0,8 mol.

7. Agent aqueux de revêtement pour du caoutchouc selon l'une quelconque des revendications 1 à 6, dans lequel le composant (C) est de fines particules sphériques d'un caoutchouc silicone.

8. Agent aqueux de revêtement pour du caoutchouc selon l'une quelconque des revendications 1 à 7, dans lequel une dureté d'après duromètre de type A préconisée dans la norme JIS K6253 pour un produit durci ayant une composition identique à celle du composant (C) est dans une plage de 10 à 90.

9. Article en caoutchouc comprenant :
un substrat composé d'un matériau en caoutchouc et
un film durci de l'agent aqueux de revêtement pour du caoutchouc selon l'une quelconque des revendications 1 à 8 qui recouvre au moins une partie d'une surface du substrat.

10. Article en caoutchouc selon la revendication 9, dans lequel le matériau en caoutchouc est un caoutchouc naturel, un caoutchouc éthylène-propylène-diène, un caoutchouc styrène-butadiène, un caoutchouc chloroprène, un caoutchouc isoprène-isobutylène, un caoutchouc nitrile ou une combinaison d'au moins deux de ces matériaux en caoutchouc.
